# EUROPEAN PATENT SPECIFICATION

(11) **EP 4 335 674 B1**
(45) Date of publication and mention of the grant of the patent: **06.11.2024**
(21) Application number: 22194928.2
(22) Date of filing: 09.09.2022
(51) Int. Cl.: B60J 1/17, E05F 11/52

(54) **VEHICLE DOOR ASSEMBLY**
FAHRZEUGTÜRANORDNUNG
ENSEMBLE PORTE DE VÉHICULE

(43) Date of publication of application: 13.03.2024
(73) Proprietor: Nio Technology (Anhui) Co., Ltd, Hefei City, Anhui 230601 (CN)
(72) Inventor: GOTO, Ryuichiro, Nagoya 456-0031 (JP); TOMASSON, Kris, 81679 München (DE); TARRONE, Alessandro, 81679 München (DE)
(74) Representative: Vossius & Partner Patentanwälte Rechtsanwälte mbB

(56) References cited:
- EP-A2- 0 479 522
- WO-A1-2019/141836
- US-A1- 2014 007 509

## Description

### BACKGROUND OF THE INVENTION

Vehicle door assemblies are known to comprise a sliding window arrangement. Conventionally, the window panel of the vehicle door is aligned with a receiving aperture or cavity of the vehicle door assembly such that the window panel can slide into and out of the receiving aperture or cavity.

Since the window panel is aligned with the receiving aperture or cavity, there is a step between the outer panel of the vehicle door and the window panel, which may cause aerodynamic drag.

### SUMMARY OF THE INVENTION

It is an object of the invention to provide a vehicle door assembly comprising a sliding window arrangement and having improved aerodynamic properties, in particular reduced aerodynamic drag. It is a further object of the invention to improve the seal between the window panel and the door body of the vehicle door assembly, in particular with regard to durability and its sealing capability. It is a further object of the invention to improve the sliding mechanism of the sliding window arrangement, in particular to reduce the complexity and improve the reliability of the sliding window arrangement.

EP 0 479 522 A2 relates to a window panel regulating and sealing assembly, particularly suited for use in combination with a vehicle door, for raising and lowering a window and assuring a perfectly flush and fully sealed condition at the vehicle exterior.

These and further objects are solved by the invention defined in the independent claim. Further embodiments of the invention are set out in the dependent claims, the description and the drawings.

The invention provides a vehicle door assembly comprising a door body and a sliding window arrangement. The sliding window arrangement comprises a window panel, a guide element attached to the door body and at least one seal for creating a seal between the window panel and the door body. The window panel is movably coupled to the guide element to be movable from a closed position to an open position and from the open position to the closed position. In the open position of the window panel, the window panel is received within a receiving aperture of the door body. In order to move the window panel from the closed position to the open position, the guide element is configured such that the window panel moves along a first direction with respect to the guide element to align with the receiving aperture of the door body and moves along a second direction with respect to the guide element to be received within the receiving aperture of the door body. Additionally or alternatively, in order to move the window panel from the open position to the closed position, the guide element is configured such that the window panel moves along a second direction with respect to the guide element out of the receiving aperture and moves along a first direction with respect to the guide element to flush with a side panel of the vehicle door assembly. The sliding window arrangement is configured such that the at least one seal moves at least along the first direction when the window panel moves along the first direction.

For example, the guide element may be configured such that, when moving from a closed position to an open position, the window panel first moves inwardly to align with the receiving aperture and then moves downwardly into the receiving aperture, and when moving from the open position to the closed position, the window panel first moves upwardly and then moves outwardly to flush with an outer panel of the vehicle door.

The vehicle door assembly may be a door assembly of a car or automobile, preferably for seating one to nine people and/or not more than nine people. The vehicle door assembly may be configured to be positioned on the sides of the vehicle. The vehicle door assembly may be a conventional hinged door, a scissor door, a butterfly door, a sliding door, or another type of vehicle door.

The sliding window arrangement may be understood to relate to a mechanism to move and/or slide a window panel from an open position to a closed position. The sliding window arrangement may comprise an actuator to move the window panel from the closed position to the open position and vice versa. The window panel may be manually operable by a user. It may be understood that, in the open position, the window panel is positioned such that the door assembly comprises an opening, and, in the closed position, said opening is closed.

The window panel may be a glass panel. The window panel may comprise a panel made of vehicle glass or car glass. Furthermore, the window panel may comprise a component that is coupled to and/or engages with the guide element, for example, one or more sliding elements. Said component or sliding element does not have to be made of glass. For example, the component or sliding element can be a separate component that is attached to the window panel.

The guide element is understood to refer to an element that is configured to guide the window panel along the first direction and the second direction. The guide element may also be configured to guide the at least one seal along the first direction when the window panel moves along the first direction. The guide element may be structured such that the window panel is moved along the first direction and the second direction when the window panel moves from the closed position to the open position. The guide element may comprise a track. The window panel may comprise a slider that is movably engaged with the track. For example, the track may be an elongated recess, in which the slider is movably received such that the slider can move along the elongation of the recess. The sliding window arrangement may comprise one or more guide elements as described herein. For example, the sliding window arrangement comprises two guide elements, one guide element on each side of the window panel. The guide element may be fixedly attached to the door body. The guide element may be provided as one part or as a plurality of parts. For example, the guide element may be provided by different parts of and/or fixedly attached to the door body.

The first direction may comprise a component in the horizontal direction with respect to the mounted position of the vehicle door and/or substantially normal direction to the window panel. The movement along the first direction may comprise a translatory component and/or a rotary component. The movement of the window panel along the second direction may comprise a translatory component. In addition, the movement along the second direction may comprise a rotary component. Preferably, the second direction substantially corresponds to the upward-downward direction with respect to the mounted position of the vehicle door. The first direction and the second direction do not need to be perpendicularly to one another. For example, the first direction and the second direction may both comprise a component along the upward-downward direction. In other words, as the window panel and/or the at least one seal moves along the first direction, the movement of window panel and/or the at least one seal may comprise a component along the upward-downward direction. Preferably, during the movement of the window panel along the first direction, the lower edge of the window panel may execute a horizontal movement between 20 mm and 60 mm.

The movement of the window panel and the at least one seal during the movement of the window panel along the first direction do not have to be exactly identical. For example, the movement of the window panel along the first direction may have a greater component in the upward-downward direction than the movement of the at least one seal. Moreover, the movement of the at least one seal may not have any component in the upward-downward direction.

In the context of the present disclosure, the terms "up", "down", "upward", "downward", "upper" and "lower" refer to directions with regard to the mounted position of the vehicle door, i.e. when the vehicle door is mounted in a vehicle. Similarly, the terms "vertical" and "horizontal" refer to the mounted position of the vehicle door. The "upward-downward" direction may also be referred to as "vertical direction". The terms "inside" and "outside" also refer to the mounted position of the vehicle door. The "inside direction" is a horizontal direction that points into the inside of the vehicle and the "outside direction" is a horizontal direction that points to the outside of the vehicle. The term "forward", "backward", "front" and "rear" refer to the horizontal direction that points in the forward-backward direction of the vehicle, to which the vehicle door is mounted.

It may be understood that the receiving aperture relates to a cavity of the door assembly that is configured to receive the window panel in the closed position of the window panel. The receiving aperture and/or cavity may be provided between an outer panel of the vehicle door assembly and an interior panel of the door assembly. Preferably, when the window panel is in the closed position, the receiving aperture and/or cavity is located below the window panel with regard to the mounted position of the vehicle door assembly.

The at least one seal may comprise or be made of Elastomer. The at least one seal may be an elongated seal that at least partly extends along an outer edge of the window panel in the closed position of the window panel. Preferably, the at least one seal may comprise a seal that extends along a lower edge of the window panel. The at least one seal may also comprise multiple seal elements that seal with different portions of the window panel. For example, the at least one seal may comprise an upper seal configured to seal with an upper portion of the window panel adjacent an upper edge of the window panel and a lower seal configured to seal with a lower portion of the window panel adjacent a lower edge of the window panel. The at least one seal may also comprise a seal that extends along an upper portion adjacent an upper edge of the window panel. Alternatively, the seal along the upper edge of the window panel does not move along the first direction when the window panel moves along the first direction. The at least one seal may also extend circumferentially along the edge of the window panel.

Preferably, the at least one seal may move simultaneously with the window panel along the first direction as the window panel moves along the first direction. Alternatively, the at least one seal may move along the first direction before or after the window panel moves along the first direction. For example, when the window panel moves from the closed position to the open position, the at least one seal may move along the first direction before or simultaneously with the window panel. When the window panel moves from the open position to the closed position, the at least one seal may move after or simultaneously with the window panel. Different portions of the at least one seal may move to a different extent along the first direction. For example, when the movement along the first direction is a rotary movement, portions of the at least one seal that are closer to the pivot point of the rotary movement move to a lesser extent than portions of the at least one seal that are further away from the pivot point.

The at least one seal may move to the same or a greater degree along the first direction than the window panel and/or the at least one seal may move at the same or with a greater rate or velocity along the first direction than the window panel.

By providing a sliding window arrangement, in which the window panel moves along the first direction and the second direction, the window panel can be flush with an outer panel of the vehicle door assembly in the closed position of the window panel. In this way, the aerodynamic drag of the vehicle door assembly can be reduced.

By moving the at least one seal along the first direction when the window panel moves along the first direction, the friction between the at least one seal and the window panel can be reduced, when the window panel moves along the second direction. In this way, the sliding window arrangement may provide a smoother movement for the window panel. Moreover, the movement of the window panel along the second direction may produce less noise. In addition, the actuator or operator needs less force to move the window panel along the second direction. Furthermore, less force is required to move the window panel from the closed position to the open position and vice versa, which may improve the durability of the actuator moving the window panel. Furthermore, by providing a guide element configured to move the window panel along a first direction and a second direction, these two movements can be provided with one actuator. Thus, it is not necessary to provide separate actuators for the different movements, which reduces complexity and improves reliability of the sliding window mechanism.

The sliding window arrangement is configured such that the at least one seal does not move along the second direction when the window panel moves along the second direction.

In other words, the at least one seal moves only along the first direction when the window panel moves along the first direction. When the window panel moves along the second direction, the at least one seal does not exert any movement.

In this way, the at least one seal does not exert any unnecessary movement, which could promote wear of the sliding window arrangement.

Preferably, the sliding window arrangement is configured such that the window panel and the at least one seal move along the first direction at the same time.

In other words, the window panel and the at least one seal move simultaneously along the first direction.

Preferably, the movement of the window panel along the second direction comprises a translatory component. In other words, the second direction comprises a translatory direction. More preferably, the movement of the window panel along the second direction is a translatory movement and/or the second direction is a translatory direction.

Preferably, the movement of the window panel and/or the at least one seal along the first direction comprises a rotary component. More preferably, a pivot point of the rotary component of the movement of the window panel along the first direction is near an upper end and/or edge of the window panel. More preferably, the movement of the window panel along the first direction is a rotary movement and/or the first direction is a rotary direction.

The upper end of the window panel may be understood as the uppermost edge of the window panel with regard to the vehicle door in the mounted position.

Preferably, the movement of the window panel and/or the at least one seal along the first direction comprises a translatory component. In other words, the first direction comprises a translatory direction. More preferably, the movement of the window panel and/or the at least one seal is a translatory movement and/or the first direction is a translatory direction.

Preferably, the first direction is different from the second direction.

Preferably, the first direction and the second direction enclose an angle between 45° and 90°.

In other words, a first vector relating to the movement of the window panel along the first direction and a second vector relating to the movement of the window panel along the second direction, as the window panel moves from the closed position to the open position may enclose an angle between 45° and 90°.

Preferably, the at least one seal is movably coupled to the guide element and/or the window panel.

In this way, the at least one seal moves along the first direction when the window panel moves along the first direction.

Preferably the vehicle door assembly further comprises a seal support frame comprising the at least one seal. The seal support frame is movably connected to the guide element and the window panel such that the seal support frame moves along the first direction with respect to the guide element when the window panel moves along the first direction.

Preferably, the window panel urges the seal support frame along the first direction when the window panel moves along the first direction.

Preferably, the sliding window arrangement is configured such that the seal support frame does not move with respect to the window panel when the window panel moves along the first direction. In other words, there is no relative movement between the seal support frame and the window panel when the window panel moves along the first direction.

Preferably, the sliding window arrangement is configured such that the seal support frame does not move along the second direction with respect to the guide element when the window panel moves along the second direction.

In other words, there is no relative movement between the seal support frame and the guide element when the window panel moves along the second direction.

The movement of the window panel and the seal support frame along the first direction do not have to be identical. For example, as the window panel moves along the first direction, its movement may have horizontal component and a component in the upward-downward direction. During the movement of the window panel along the first direction, the seal support frame may move only along the horizontal direction. During the movement along the first direction, the window panel may also move along the upward-downward direction.

Preferably, the guide element comprises a first track portion interconnected with a second track portion. The window panel comprises a first slider that is movably engaged with the first track portion and the second track portion. The sliding window arrangement is configured such that the first slider moves along the first track portion when the window panel is moved along the first direction, and the first slider moves along the second track portion when the window panel is moved along the second direction.

The first track portion may continuously transition into the second track portion. The first track portion and the second track portion may enclose an angle between 90° and 135°.

Preferably, the seal support frame comprises a third track portion. The first slider is movably engaged with the third track portion. The sliding window arrangement is configured such that the first slider moves along the third track portion when the window panel is moved along the second direction and, the first slider urges the seal support frame along the first direction when the window panel is moved along the first direction.

In this way, the at least one seal moves along the first direction when the window panel moves along the first direction. Furthermore, the at least one seal does not move along the second direction when the window panel moves along the second direction.

Preferably, the guide element comprises a fourth track portion and the window panel comprises a second slider that is movably engaged with the fourth track portion, wherein the sliding window arrangement is configured such that the second slider moves along the fourth track portion when the window panel is moved along the second direction.

The first slider may be positioned near and/or adjacent a lower edge of the window panel and/or the second slider may be positioned near and/or adjacent an upper edge of the window panel.

Preferably, the guide element comprises a fifth track portion interconnected with the fourth track portion, wherein the second slider is movably engaged with the fourth track portion and the fifth track portion, and the sliding window arrangement is configured such that the second slider moves along the fifth track portion when the window panel is moved along the first direction.

The fourth track portion may continuously transition into the fifth track portion. The fifth track portion and the fourth track portion may enclose an angle between 90° and 135°.

In this way, the movement of the window panel and/or the at least one sealing element along the first direction comprises a translatory component.

Preferably, the movement of the window panel and/or the at least one seal comprises a rotary component and the second slider defines a pivot point of the rotary movement and/or first direction.

Preferably, the seal support frame comprises a sixth track portion and the second slider is movably engaged with the sixth track portion, wherein the sliding window arrangement is configured such that the second slider moves along the sixth track portion when the window panel is moved along the second direction.

In this way, the at least one seal does not move along the second direction when the window panel moves along the second direction.

Preferably, the sliding window arrangement is configured such that the second slider urges the seal support frame along the first direction when the window panel is moved along the first direction.

In this way, the at least one seal is moved along the first direction with a translatory component.

Preferably, the guide element comprises a seventh track portion and the seal support frame comprises a third slider, wherein the third slider is movably engaged with the seventh track portion, and the sliding window arrangement is configured such that the third slider moves along the seventh track portion when the window panel and/or the seal support frame are/is moved along the first direction.

Preferably, the guide element comprises a third slider and the seal support frame comprises a seventh track portion, wherein the third slider is movably engaged with the seventh track portion, and the sliding window arrangement is configured such that the third slider moves along the seventh track portion when the window panel and/or the seal support frame are/is moved along the first direction.

Preferably, the seventh track portion is substantially aligned in the horizontal direction. The seventh track portion helps to stabilise the seal support frame and/or to prevent that the seal support frame moves along the second direction when the window panel moves along the second direction.

Preferably, the at least one seal comprises a lower seal configured to create a seal with a lower inner portion of the window panel, and, preferably, an upper seal configured to create a seal with an upper inner portion of the window panel.

Preferably, the door assembly comprises a fixed seal attached to the door body configured to create a seal with an outer lower portion of the window panel.

In other words, the fixed seal does not exert any movement when the window panel and/or the at least one seal move along the first direction and/or the second direction.

The invention further relates to a vehicle comprising the vehicle door assembly according to any one of the preceding claims.

Preferably, the vehicle comprises two or more, more preferably at least or exactly four vehicle doors as disclosed herein.

Preferably, the vehicle is a passenger car or automobile. More preferably, the vehicle is configured to seat one to nine people and/or not more than nine people.

### BRIEF DESCRIPTION OF THE DRAWING

The invention will be described in more detail with reference to the figure below. The figure discloses exemplary embodiments of the invention for illustrational purposes only. In particular, the disclosure provided by the figure is not meant to limit the scope of protection conferred by the invention.
Fig. 1 shows a cross-section of a vehicle door assembly according to an exemplary embodiment.
Fig. 2 shows a cross-section of a vehicle door assembly according to a further exemplary embodiment.
Fig. 3 shows a perspective view of vehicle door assembly according to a further exemplary embodiment.
Fig. 4 shows a vehicle according to a further exemplary embodiment.

### DETAILED DESCRIPTION

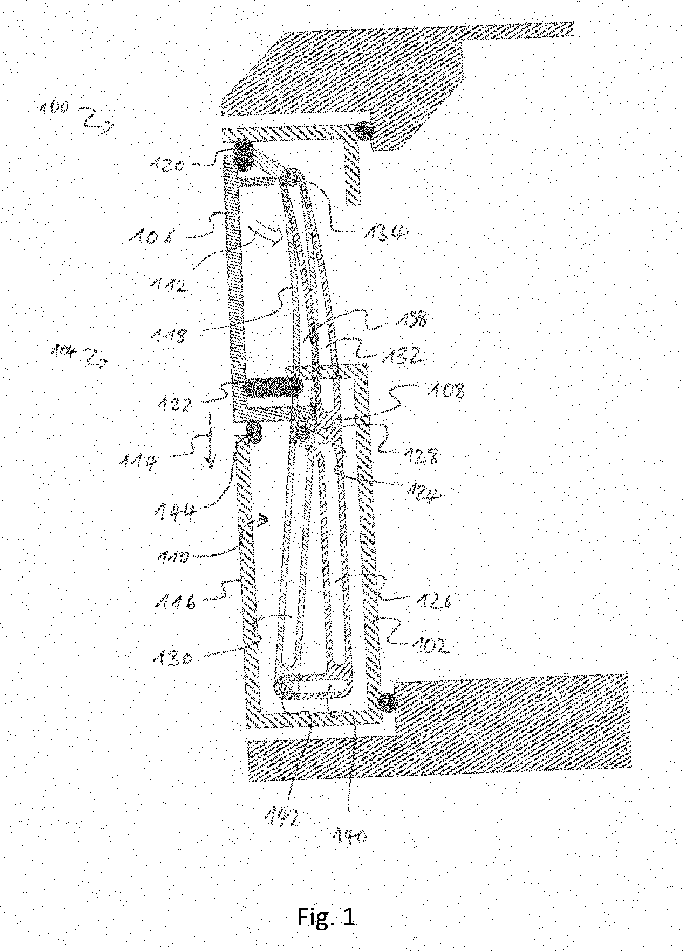

Fig. 1 shows a cross section of a door assembly 100 according to an exemplary embodiment. The door assembly 100 comprises a door body 102.

The door assembly 100 comprises a sliding window arrangement 104. The sliding window arrangement 104 comprises a window panel 106 and a guide element 108. The window panel 106 is movable from a closed position to an open position and vice versa, wherein Fig. 1 shows the closed position of the window panel 106. The window panel 106 is coupled to the guide element 108 such that, when moving from the closed position to the open position, the window panel 106 first moves inwardly along a first direction 112 and then subsequently moves along a second direction 114. The first direction 112 comprises a component in the horizontal direction, i.e. substantially normal to the window panel 106. In this way, the window panel 106 can move from a position where it is flush with an outer panel 116 of the door body into a position where it is aligned with a receiving aperture or cavity 110. After being aligned with the receiving aperture or cavity 110, the window panel 106 moves downwardly along the second direction 114. The second direction 114 comprises a component in the upward-downward direction. In this way, the window panel 106 is moved into the receiving aperture or cavity 110.

When moving from the open position to the closed position, the window panel 106 first moves upwardly along the second direction 114, i.e. in the upward direction, to move out of the receiving aperture or cavity 110 and then subsequently moves outwardly along the first direction 112, i.e. in the outward direction, to substantially flush with the outer panel 116.

Furthermore, the sliding window arrangement 104 comprises seals 120, 122 and 144. The sliding window arrangement 104 is configured such that the seal 122 moves along the first direction 112 as the window panel 106 moves along the first direction 112. The seal 122 is configured to create a seal between an inner side of the window panel 106 near a lower edge of the window panel 106 and the door body 102. The seal 120 is configured to create a seal between an inner side of the window panel 106 near an upper edge of the window panel 106 and the door body 102, and the seal 144 is configured to create a seal between the outer side of the window panel 106 near a lower edge of the window panel 106 and the door body 102.

In this exemplary embodiment, the sliding window arrangement 104 comprises a seal support frame 118, and the seal 122 is attached to the seal support frame 118. The seal support frame 118 is movably coupled to the guide element 108 and the window panel 106. As the window panel 106 moves along the first direction 112, it urges the seal support frame 118 along the first direction 112 such that the seal 122 is moved along the first direction 112. In this way, the seal 122 is moved along the first direction 112 as the window panel 106 moves along the first direction 112, i.e. at the same time. Moreover, the seal 122 does not move along the second direction 114 as the window panel 106 moves along the second direction.

More specifically, the guide element 108 comprises a first track portion 124 interconnected with a second track portion 126. The first track portion 124 and the second track portion enclose an angle of about 110°. The seal support frame 108 comprises a third track portion 130. The window panel 106 comprises a first slider 128 that is movably coupled or engaged with the first track portion 124, the second track portion 126 and the third track portion 130. In orderto move the window panel 106 along the first direction 112, the first slider 128 moves along the first track portion 124. During this movement of the first slider 128, the slider eventually moves along the third track portion 130. Furthermore, the first slider 128 urges the seal support frame 118 along the second direction 114. In this way, the seal 122 is moved along the first direction 112 as the window panel 106 moves along the first direction 112. In order to move the window panel 106 along the second direction 114 into the receiving aperture or cavity 110, the first slider 128 moves along the second track portion 126. As the first slider 128 moves along the second track portion 126, the first slider 128 also moves along the third track portion 130 of the seal support frame 108. In this way, the seal 122 does not move further along the second direction 114 when the window panel 106 moves along the second direction 114 into the receiving aperture or cavity 110.

The guide element 108 further comprises a fourth track portion 132 and the seal support frame 118 comprises a sixth track portion 138. The window element 106 comprises a second slider 134 that is moveably coupled to or engaged with the fourth track portion 132 and the sixth track portion 138. As the window panel 106 moves along the first direction 112, the second slider 134 may eventually move along the fourth track portion 132 and the sixth track portion 138. This is especially the case if the first track portion 124 is not horizontally aligned, i.e. the first direction 112 comprises a component in the upward-downward direction. Thus, the movement of the window panel 106 and the seal 122 along the first direction 112 comprises a rotary component and eventually a translatory component. The pivot point of the rotary component is defined by the second slider 134.

The guide element 108 further comprises a seventh track portion 140 and the seal support frame 118 comprises a third slider 142 that is moveably coupled to or engaged with the seventh track portion 140. The seventh track portion 140 is essentially aligned along the horizontal direction, wherein the horizontal direction is defined with regard to the mounted position of the vehicle door. As the first slider 128 moves along the first track portion 124, the first slider 128 urges the seal support frame 118 along the first direction 112 such that the third slider 142 moves along the seventh track portion 140. Alternatively, the seventh track portion 140 may be provided on the seal support frame 118 and the third slider 142 may be provided on the guide element 108.

In the present exemplary embodiment, the seal 122 that creates a seal with an upper portion of the inner side of the window panel 106 and the seal 122 that creates a seal with a lower portion of the inner side of the window panel 106 are attached to the seal support frame 118. The seal 144 that creates a seal with a lower portion of the outer side of the window panel 106 are not attached to the seal support frame 118 and/or do not exert any movement as the window panel 106 moves along the first direction 112. As such, the seal 120 and 144 are fixed seals.

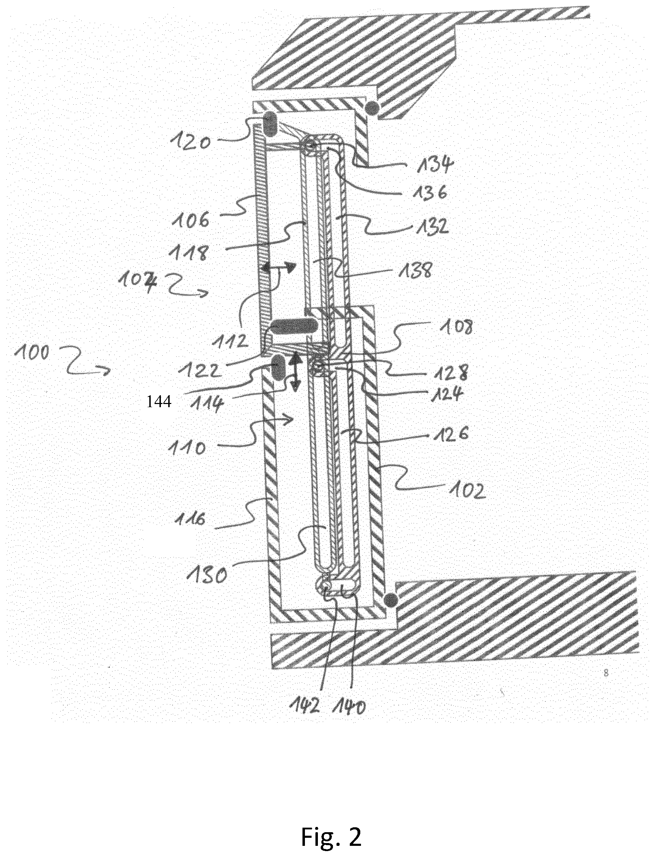

Fig. 2 shows a cross section of a vehicle door assembly 100 according to a further exemplary embodiment. In the following, only the differences to the embodiment shown in Fig. 1 are described. For the remaining features of the embodiment of Fig. 2, the description disclosed with regard to Fig. 1 is applicable.

In contrast to the embodiment of Fig. 1, the guide element 108 comprises a fifth track portion 136 that has the same orientation as the first track portion 124. The first track portion 124 and the second track portion 126 enclose an angle of about 90°. Similarly, the fourth track portion 132 and the fifth track portion 136 enclose an angle of about 90°. During the movement of the window panel 106 along the first direction 112, the first slider 124 is moved along the first track portion 124 and the second slider 134 is moved along the fifth track portion 136. In this way, the window panel 106 exerts a translatory movement along the first direction 112. Moreover, the first slider 128 and the second slider 134 both urge the seal support frame 118 along the first direction 112 when the window panel 106 is moved along the first direction 112. In this way, the seal support frame 118 exerts a translatory movement along the first direction 112.

Moreover, in contrast to the embodiment of Fig. 1, the seal 120 that creates a seal with an upper portion of the inner side of the window panel 106 is attached to the seal support frame 118. In this way, the upper seal 120 exerts a movement along the first direction 112 as the window panel 106 moves along the first direction.

Thus, Fig. 2 shows to an exemplary embodiment where the window panel 106 exerts a translatory movement as it moves along the first direction 112. In contrast thereto, Fig. 1 shows an exemplary embodiment where the window panel 106 exerts a movement with a rotary component as it moves along the first direction 112.

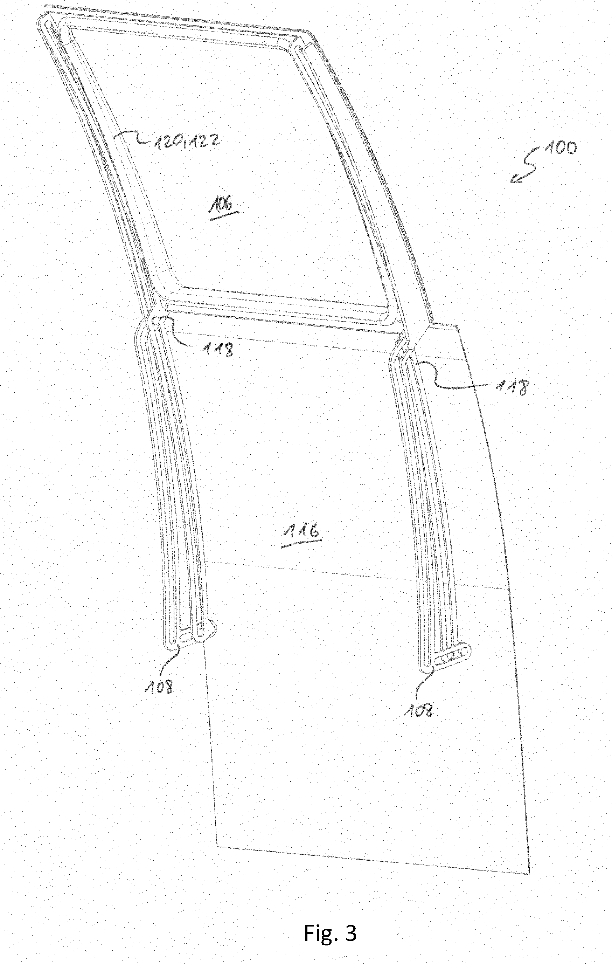

Fig. 3 shows a perspective view of a vehicle door assembly 100. The structure and function of the vehicle door assembly 100 essentially corresponds to the vehicle door assembly 100 shown in Fig. 1. Therefore, reference is made to the explanations given with regard to Fig. 1.

As can be seen in Fig. 3, the vehicle door assembly 100 comprises two guide elements provided on the front side and the rear side of the vehicle door assembly 100, respectively. Accordingly, the door assembly 100 comprises two seal support frames 118 provided on the front side and the rear side of the vehicle door assembly 100, respectively. The at least one seal 120, 122 is provided as circumferential seal extending along the circumference of the window panel 106.

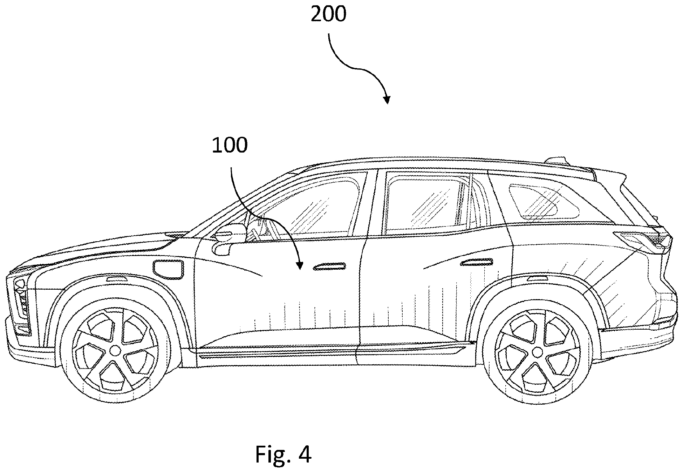

Fig. 4 shows a vehicle 200, more specifically a car or automobile, according to an exemplary embodiment. The vehicle 200 comprises a vehicle door assembly 100 as disclosed herein. More specifically, the vehicle 100 comprises four passenger doors, each of which is a door assembly as disclosed herein, i.e., has a sliding window arrangement as disclosed herein.

## Claims

1. Vehicle door assembly (100) comprising a door body (102) and a sliding window arrangement (104),
the sliding window arrangement (104) comprising:
a window panel (106);
a guide element (108) attached to the door body (102);
at least one seal (120, 122) for creating a seal between the window panel (106) and the door body (102);
wherein the window panel (106) is movably coupled to the guide element (108) to be movable from a closed position to an open position and from the open position to the closed position;
wherein, in the open position of the window panel (106), the window panel (106) is received within a receiving aperture (110) of the door body (102);
wherein
• the guide element (108) is configured such that, in order to move the window panel (106) from a closed position to the open position, the window panel (106) moves along a first direction (112) with respect to the guide element (108) to align with the receiving aperture (110) of the door body (102) and moves along a second direction (114) with respect to the guide element (108) to be received within the receiving aperture (110) of the door body (106); and/or
• the guide element (108) is configured such that, in order to move the window panel (106) from the open position to a closed position, the window panel (106) moves along a second direction (114) with respect to the guide element (108) out of the receiving aperture (110) and moves along a first direction (112) with respect to the guide element (108) to flush with a side panel (116) of the vehicle door assembly; and
wherein the sliding window arrangement (104) is configured such that the at least one seal (120, 122) moves at least along the first direction (112) when the window panel (106) moves along the first direction (112);
**characterized in that** the sliding window arrangement (104) is configured such that the at least one seal (120, 122) does not move along the second direction (114) when the window panel (106) moves along the second direction (114).

2. Vehicle door assembly (100) according to any one of the preceding claims, wherein the sliding window arrangement (104) is configured such that the window panel (106) and the at least one seal (120, 122) move along the first direction (112) at the same time.

3. Vehicle door assembly (100) according to any one of the preceding claims, wherein the movement of the window panel (106) and/or the at least one seal along the first direction (112) comprises a rotary component; and
wherein, preferably, a pivot point of the rotary component of the movement of the window panel (106) along the first direction (112) is near an upper end of the window panel (106).

4. Vehicle door assembly (100) according to any one of the preceding claims, wherein the first direction (112) and the second direction (114) enclose an angle between 45° and 90°.

5. Vehicle door assembly (100) according to any one of the preceding claims, wherein the at least one seal (120, 122) is movably coupled to the guide element (108) and/or the window panel (106).

6. Vehicle door assembly (100) according to any one of the preceding claims, further comprising:
a seal support frame (118) comprising the at least one seal (120, 122);
wherein the seal support frame (118) is movably connected to the guide element (108) and the window panel (106) such that the seal support frame (118) moves along the first direction (112) with respect to the guide element (108) when the window panel (106) moves along the first direction (112).

7. Vehicle door assembly (100) according to claim 6, wherein the sliding window arrangement (104) is configured such that the seal support frame (118) does not move along the second direction (114) with respect to the guide element (108) when the window panel (106) moves along the second direction (114).

8. Vehicle door assembly (100) according to any one of the preceding claims, wherein the guide element (108) comprises a first track portion (124) interconnected with a second track portion (126);
wherein the window panel comprises a first slider (128) that is movably engaged with the first track portion (124) and the second track portion (126);
wherein the sliding window arrangement (104) is configured such that the first slider (128) moves along the first track portion (124) when the window panel (106) is moved along the first direction (112); and
wherein the sliding window arrangement (104) is configured such that the first slider (128) moves along the second track portion (126) when the window panel (106) is moved along the second direction (114).

9. Vehicle door assembly (100) according to any one of the preceding claims when dependent on claim 6,
wherein the seal support frame (118) comprises a third track portion (130);
wherein the first slider (128) is movably engaged with the third track portion (130);
wherein the sliding window arrangement (104) is configured such that the first slider (128) moves along the third track portion (130) when the window panel (106) is moved along the second direction (114); and
wherein the sliding window arrangement (104) is configured such that the first slider (128) urges the seal support frame (118) along the first direction (112) when the window panel (106) is moved along the first direction (112).

10. Vehicle door assembly (100) according to claim 9,
wherein the guide element (108) comprises a fourth track portion (132);
wherein the window panel (106) comprises a second slider (134) that is movably engaged with the fourth track portion (132);
wherein the sliding window arrangement (104) is configured such that the second slider (134) moves along the fourth track portion (132) when the window panel (106) is moved along the second direction (114).

11. Vehicle door assembly (100) according to claim 10,
wherein the movement of the window panel and/or the at least one seal along the first direction comprises a rotary component; and
wherein the second slider (134) defines a pivot point of the rotary component of the movement of the window panel and/or the at least one seal along the first direction (112).

12. Vehicle door assembly (100) according to claim 10 or 11,
wherein the seal support frame (118) comprises a sixth track portion (138);
wherein the second slider (134) is movably engaged with the sixth track portion (138);
wherein the sliding window arrangement (104) is configured such that the second slider (134) moves along the sixth track portion (138) when the window panel (106) is moved along the second direction (114); and
wherein the sliding window arrangement (104) is configured such that the second slider (134) urges the seal support frame (118) along the first direction (112) when the window panel (106) is moved along the first direction (112).

13. Vehicle door assembly (100) according to any one of claims 6 to 12 when dependent on claim 6,
wherein
• the guide element (108) comprises a seventh track portion (140) and the seal support frame (118) comprises a third slider (142); or
• the guide element (108) comprises a third slider (142) and the seal support frame (118) comprises a seventh track portion (140);
wherein the third slider (142) is movably engaged with the seventh track portion (140);
wherein the sliding window arrangement (104) is configured such that the third slider (142) moves along the seventh track portion (140) when the window panel (106) and/or the seal support frame (118) are/is moved along the first direction (112).

14. Vehicle (200) comprising the vehicle door assembly (100) according to any one of the preceding claims.

## Patentansprüche

1. Fahrzeugtürbaugruppe (100), die einen Türkörper (102) und eine Schiebefensteranordnung (104) umfasst, wobei die Schiebefensteranordnung (104) Folgendes umfasst:
eine Fensterscheibe (106);
ein Führungselement (108), das an dem Türkörper (102) befestigt ist;
mindestens eine Dichtung (120, 122), um eine Abdichtung zwischen der Fensterscheibe (106) und dem Türkörper (102) zu erzeugen;
wobei die Fensterscheibe (106) mit dem Führungselement (108) beweglich gekoppelt ist, um von einer geschlossenen Position in eine offene Position und von der offenen Position in die geschlossene Position bewegbar zu sein; wobei die Fensterscheibe (106) in der offenen Position der Fensterscheibe (106) in einer Aufnahmeöffnung (110) des Türkörpers (102) aufgenommen ist;
wobei
- das Führungselement (108), um die Fensterscheibe (106) von einer geschlossenen Position in die offene Position zu bewegen, derart konfiguriert ist, dass sich die Fensterscheibe (106) entlang einer ersten Richtung (112) bezüglich des Führungselements (108) bewegt, um sich an der Aufnahmeöffnung (110) des Türkörpers (102) auszurichten, und sich entlang einer zweiten Richtung (114) bezüglich des Führungselements (108) bewegt, um in der Aufnahmeöffnung (110) des Türkörpers (106) aufgenommen zu werden; und/oder
- das Führungselement (108), um die Fensterscheibe (106) von der offenen Position in eine geschlossene Position zu bewegen, derart konfiguriert ist, dass sich die Fensterscheibe (106) entlang einer zweiten Richtung (114) bezüglich des Führungselements (108) aus der Aufnahmeöffnung (110) heraus bewegt und sich entlang einer ersten Richtung (112) bezüglich des Führungselements (108) bewegt, um mit einem Seitenteil (116) der Fahrzeugtürbaugruppe bündig abzuschließen; und wobei die Schiebefensteranordnung (104) derart konfiguriert ist, dass sich die mindestens eine Dichtung (120, 122) zumindest entlang der ersten Richtung (112) bewegt, wenn sich die Fensterscheibe (106) entlang der ersten Richtung (112) bewegt;
**dadurch gekennzeichnet, dass** die Schiebefensteranordnung (104) derart konfiguriert ist, dass sich die mindestens eine Dichtung (120, 122) nicht entlang der zweiten Richtung (114) bewegt, wenn sich die Fensterscheibe (106) entlang der zweiten Richtung (114) bewegt.

2. Fahrzeugtürbaugruppe (100) nach einem der vorhergehenden Ansprüche, wobei die Schiebefensteranordnung (104) derart konfiguriert ist, dass sich die Fensterscheibe (106) und die mindestens eine Dichtung (120, 122) gleichzeitig entlang der ersten Richtung (112) bewegen.

3. Fahrzeugtürbaugruppe (100) nach einem der vorhergehenden Ansprüche, wobei die Bewegung der Fensterscheibe (106) und/oder der mindestens einen Dichtung entlang der ersten Richtung (112) eine Drehkomponente umfasst; und
wobei vorzugsweise ein Schwenkpunkt der Drehkomponente der Bewegung der Fensterscheibe (106) entlang der ersten Richtung (112) sich in der Nähe eines oberen Endes der Fensterscheibe (106) befindet.

4. Fahrzeugtürbaugruppe (100) nach einem der vorhergehenden Ansprüche, wobei die erste Richtung (112) und die zweite Richtung (114) einen Winkel zwischen 45° und 90° einschließen.

5. Fahrzeugtürbaugruppe (100) nach einem der vorhergehenden Ansprüche, wobei die mindestens eine Dichtung (120, 122) mit dem Führungselement (108) und/oder der Fensterscheibe (106) beweglich gekoppelt ist.

6. Fahrzeugtürbaugruppe (100) nach einem der vorhergehenden Ansprüche, die ferner Folgendes umfasst:
einen Dichtungstragrahmen (118), der die mindestens eine Dichtung (120, 122) umfasst;
wobei der Dichtungstragrahmen (118) mit dem Führungselement (108) und der Fensterscheibe (106) beweglich derart verbunden ist, dass sich der Dichtungstragrahmen (118) entlang der ersten Richtung (112) bezüglich des Führungselements (108) bewegt, wenn sich die Fensterscheibe (106) entlang der ersten Richtung (112) bewegt.

7. Fahrzeugtürbaugruppe (100) nach Anspruch 6, wobei die Schiebefensteranordnung (104) derart konfiguriert ist, dass sich der Dichtungstragrahmen (118) nicht entlang der zweiten Richtung (114) bezüglich des Führungselements (108) bewegt, wenn sich die Fensterscheibe (106) entlang der zweiten Richtung (114) bewegt.

8. Fahrzeugtürbaugruppe (100) nach einem der vorhergehenden Ansprüche,
wobei das Führungselement (108) einen ersten Führungsabschnitt (124) umfasst, der mit einem zweiten Führungsabschnitt (126) verbunden ist;
wobei die Fensterscheibe einen ersten Schlitten (128) umfasst, der mit dem ersten Führungsabschnitt (124) und dem zweiten Führungsabschnitt (126) beweglich in Eingriff ist;
wobei die Schiebefensteranordnung (104) derart konfiguriert ist, dass sich der erste Schlitten (128) entlang des ersten Führungsabschnitts (124) bewegt, wenn die Fensterscheibe (106) entlang der ersten Richtung (112) bewegt wird; und
wobei die Schiebefensteranordnung (104) derart konfiguriert ist, dass sich der erste Schlitten (128) entlang des zweiten Führungsabschnitts (126) bewegt, wenn die Fensterscheibe (106) entlang der zweiten Richtung (114) bewegt wird.

9. Fahrzeugtürbaugruppe (100) nach einem der vorhergehenden Ansprüche, wenn abhängig von Anspruch 6, wobei der Dichtungstragrahmen (118) einen dritten Führungsabschnitt (130) umfasst;
wobei der erste Schlitten (128) mit dem dritten Führungsabschnitt (130) beweglich in Eingriff ist;
wobei die Schiebefensteranordnung (104) derart konfiguriert ist, dass sich der erste Schlitten (128) entlang des dritten Führungsabschnitts (130) bewegt, wenn die Fensterscheibe (106) entlang der zweiten Richtung (114) bewegt wird; und
wobei die Schiebefensteranordnung (104) derart konfiguriert ist, dass der erste Schlitten (128) den Dichtungstragrahmen (118) entlang der ersten Richtung (112) drängt, wenn die Fensterscheibe (106) entlang der ersten Richtung (112) bewegt wird.

10. Fahrzeugtürbaugruppe (100) nach Anspruch 9,
wobei das Führungselement (108) einen vierten Führungsabschnitt (132) umfasst;
wobei die Fensterscheibe (106) einen zweiten Schlitten (134) umfasst, der mit dem vierten Führungsabschnitt (132) beweglich in Eingriff ist;
wobei die Schiebefensteranordnung (104) derart konfiguriert ist, dass sich der zweite Schlitten (134) entlang des vierten Führungsabschnitts (132) bewegt, wenn die Fensterscheibe (106) entlang der zweiten Richtung (114) bewegt wird.

11. Fahrzeugtürbaugruppe (100) nach Anspruch 10,
wobei die Bewegung der Fensterscheibe und/oder der mindestens einen Dichtung entlang der ersten Richtung eine Drehkomponente umfasst; und
wobei der zweite Schlitten (134) einen Schwenkpunkt der Drehkomponente der Bewegung der Fensterscheibe und/oder der mindestens einen Dichtung entlang der ersten Richtung (112) definiert.

12. Fahrzeugtürbaugruppe (100) nach Anspruch 10 oder 11, wobei der Dichtungstragrahmen (118) einen sechsten Führungsabschnitt (138) umfasst;
wobei der zweite Schlitten (134) mit dem sechsten Führungsabschnitt (138) beweglich in Eingriff ist;
wobei die Schiebefensteranordnung (104) derart konfiguriert ist, dass sich der zweite Schlitten (134) entlang des sechsten Führungsabschnitts (138) bewegt, wenn die Fensterscheibe (106) entlang der zweiten Richtung (114) bewegt wird; und
wobei die Schiebefensteranordnung (104) derart konfiguriert ist, dass der zweite Schlitten (134) den Dichtungstragrahmen (118) entlang der ersten Richtung (112) drängt, wenn die Fensterscheibe (106) entlang der ersten Richtung (112) bewegt wird.

13. Fahrzeugtürbaugruppe (100) nach einem der Ansprüche 6 bis 12, wenn abhängig von Anspruch 6, wobei
- das Führungselement (108) einen siebten Führungsabschnitt (140) umfasst und der Dichtungstragrahmen (118) einen dritten Schlitten (142) umfasst; oder
- das Führungselement (108) einen dritten Schlitten (142) umfasst und der Dichtungstragrahmen (118) einen siebten Führungsabschnitt (140) umfasst;
wobei der dritte Schlitten (142) mit dem siebten Führungsabschnitt (140) beweglich in Eingriff ist;
wobei die Schiebefensteranordnung (104) derart konfiguriert ist, dass sich der dritte Schlitten (142) entlang des siebten Führungsabschnitts (140) bewegt, wenn die Fensterscheibe (106) und/oder der Dichtungstragrahmen (118) entlang der ersten Richtung (112) bewegt werden.

14. Fahrzeug (200), das die Fahrzeugtürbaugruppe (100) nach einem der vorhergehenden Ansprüche umfasst.

## Revendications

1. Ensemble portière de véhicule (100) comprenant un corps de portière (102) et un agencement de vitre coulissante (104),
l'agencement de vitre coulissante (104) comprenant :
un panneau de vitre (106) ;
un élément guide (108) attaché au corps de portière (102) ;
au moins un joint d'étanchéité (120, 122) pour créer une étanchéité entre le panneau de vitre (106) et le corps de portière (102) ;
dans lequel le panneau de vitre (106) est accouplé de façon mobile à l'élément guide (108) pour être mobile depuis une position fermée jusqu'à une position ouverte et depuis la position ouverte jusqu'à la position fermée ;
dans lequel, dans la position ouverte du panneau de vitre (106), le panneau de vitre (106) est reçu à l'intérieur d'une ouverture de réception (110) du corps de portière (102) ;
dans lequel
• l'élément guide (108) est configuré de telle sorte que, afin de mouvoir le panneau de vitre (106) depuis une position fermée jusqu'à la position ouverte, le panneau de vitre (106) se meuve le long d'une première direction (112) par rapport à l'élément guide (108) pour s'aligner avec l'ouverture de réception (110) du corps de portière (102) et se meuve le long d'une seconde direction (114) par rapport à l'élément guide (108) pour être reçu à l'intérieur de l'ouverture de réception (110) du corps de portière (106) ; et/ou
• l'élément guide (108) est configuré de telle sorte que, afin de mouvoir le panneau de vitre (106) depuis la position ouverte jusqu'à une position fermée, le panneau de vitre (106) se meuve le long d'une seconde direction (114) par rapport à l'élément guide (108) hors de l'ouverture de réception (110) et se meuve le long d'une première direction (112) par rapport à l'élément guide (108) pour être au même niveau qu'un panneau latéral (116) de l'ensemble portière de véhicule ; et dans lequel l'agencement de vitre coulissante (104) est configuré de telle sorte que l'au moins un joint d'étanchéité (120, 122) se meuve au moins le long de la première direction (112) lorsque le panneau de vitre (106) se meut le long de la première direction (112) ;
**caractérisé en ce que** l'agencement de vitre coulissante (104) est configuré de telle sorte que l'au moins un joint d'étanchéité (120, 122) ne se meuve pas le long de la seconde direction (114) lorsque le panneau de vitre (106) se meut le long de la seconde direction (114).

2. Ensemble portière de véhicule (100) selon l'une quelconque des revendications précédentes, dans lequel l'agencement de vitre coulissante (104) est configuré de telle sorte que le panneau de vitre (106) et l'au moins un joint d'étanchéité (120, 122) se meuvent le long de la première direction (112) en même temps.

3. Ensemble portière de véhicule (100) selon l'une quelconque des revendications précédentes, dans lequel le mouvement du panneau de vitre (106) et/ou de l'au moins un joint d'étanchéité le long de la première direction (112) comprend une composante rotative ; et
dans lequel, de préférence, un point de pivotement de la composante rotative du mouvement du panneau de vitre (106) le long de la première direction (112) est près d'une extrémité supérieure du panneau de vitre (106).

4. Ensemble portière de véhicule (100) selon l'une quelconque des revendications précédentes, dans lequel la première direction (112) et la seconde direction (114) délimitent un angle entre 45 ° et 90 °.

5. Ensemble portière de véhicule (100) selon l'une quelconque des revendications précédentes, dans lequel l'au moins un joint d'étanchéité (120, 122) est accouplé de façon mobile à l'élément guide (108) et/ou au panneau de vitre (106).

6. Ensemble portière de véhicule (100) selon l'une quelconque des revendications précédentes, comprenant en outre :
un cadre de support de joint d'étanchéité (118) comprenant l'au moins un joint d'étanchéité (120, 122) ;
dans lequel le cadre de support de joint d'étanchéité (118) est relié de façon mobile à l'élément guide (108) et au panneau de vitre (106) de telle sorte que le cadre de support de joint d'étanchéité (118) se meuve le long de la première direction (112) par rapport à l'élément guide (108) lorsque le panneau de vitre (106) se meut le long de la première direction (112).

7. Ensemble portière de véhicule (100) selon la revendication 6, dans lequel l'agencement de vitre coulissante (104) est configuré de telle sorte que le cadre de support de joint d'étanchéité (118) ne se meuve pas le long de la seconde direction (114) par rapport à l'élément guide (108) lorsque le panneau de vitre (106) se meut le long de la seconde direction (114).

8. Ensemble portière de véhicule (100) selon l'une quelconque des revendications précédentes,
dans lequel l'élément guide (108) comprend une première partie voie (124) reliée à une deuxième partie voie (126) ;
dans lequel le panneau de vitre comprend un premier coulisseau (128) qui est en prise de façon mobile avec la première partie voie (124) et la deuxième partie voie (126) ;
dans lequel l'agencement de vitre coulissante (104) est configuré de telle sorte que le premier coulisseau (128) se meuve le long de la première partie voie (124) lorsque le panneau de vitre (106) est mû le long de la première direction (112) ; et
dans lequel l'agencement de vitre coulissante (104) est configuré de telle sorte que le premier coulisseau (128) se meuve le long de la deuxième partie voie (126) lorsque le panneau de vitre (106) est mû le long de la seconde direction (114).

9. Ensemble portière de véhicule (100) selon l'une quelconque des revendications précédentes lorsqu'elle dépend de la revendication 6,
dans lequel le cadre de support de joint d'étanchéité (118) comprend une troisième partie voie (130) ;
dans lequel le premier coulisseau (128) est en prise de façon mobile avec la troisième partie voie (130) ;
dans lequel l'agencement de vitre coulissante (104) est configuré de telle sorte que le premier coulisseau (128) se meuve le long de la troisième partie voie (130) lorsque le panneau de vitre (106) est mû le long de la seconde direction (114) ; et
dans lequel l'agencement de vitre coulissante (104) est configuré de telle sorte que le premier coulisseau (128) pousse le cadre de support de joint d'étanchéité (118) le long de la première direction (112) lorsque le panneau de vitre (106) est mû le long de la première direction (112).

10. Ensemble portière de véhicule (100) selon la revendication 9,
dans lequel l'élément guide (108) comprend une quatrième partie voie (132) ;
dans lequel le panneau de vitre (106) comprend un deuxième coulisseau (134) qui est en prise de façon mobile avec la quatrième partie voie (132) ;
dans lequel l'agencement de vitre coulissante (104) est configuré de telle sorte que le deuxième coulisseau (134) se meuve le long de la quatrième partie voie (132) lorsque le panneau de vitre (106) est mû le long de la seconde direction (114).

11. Ensemble portière de véhicule (100) selon la revendication 10,
dans lequel le mouvement du panneau de vitre et/ou de l'au moins un joint d'étanchéité le long de la première direction comprend une composante rotative ; et
dans lequel le deuxième coulisseau (134) définit un point de pivotement de la composante rotative du mouvement du panneau de vitre et/ou de l'au moins un joint d'étanchéité le long de la première direction (112).

12. Ensemble portière de véhicule (100) selon la revendication 10 ou 11,
dans lequel le cadre de support de joint d'étanchéité (118) comprend une sixième partie voie (138) ;
dans lequel le deuxième coulisseau (134) est en prise de façon mobile avec la sixième partie voie (138) ;
dans lequel l'agencement de vitre coulissante (104) est configuré de telle sorte que le deuxième coulisseau (134) se meuve le long de la sixième partie voie (138) lorsque le panneau de vitre (106) est mû le long de la seconde direction (114) ; et
dans lequel l'agencement de vitre coulissante (104) est configuré de telle sorte que le deuxième coulisseau (134) pousse le cadre de support de joint d'étanchéité (118) le long de la première direction (112) lorsque le panneau de vitre (106) est mû le long de la première direction (112).

13. Ensemble portière de véhicule (100) selon l'une quelconque des revendications 6 à 12 lorsqu'elle dépend de la revendication 6, dans lequel
• l'élément guide (108) comprend une septième partie voie (140) et le cadre de support de joint d'étanchéité (118) comprend un troisième coulisseau (142) ; ou
• l'élément guide (108) comprend un troisième coulisseau (142) et le cadre de support de joint d'étanchéité (118) comprend une septième partie voie (140) ;
dans lequel le troisième coulisseau (142) est en prise de façon mobile avec la septième partie voie (140) ;
dans lequel l'agencement de vitre coulissante (104) est configuré de telle sorte que le troisième coulisseau (142) se meuve le long de la septième partie voie (140) lorsque le panneau de vitre (106) et/ou le cadre de support de joint d'étanchéité (118) sont mus/est mû le long de la première direction (112).

14. Véhicule (200), comprenant l'ensemble portière de véhicule (100) selon l'une quelconque des revendications précédentes.
